# EUROPÄISCHE PATENTANMELDUNG

(11) **EP 1 138 544 A2**
(43) Veröffentlichungstag der Anmeldung: **04.10.2001**
(21) Anmeldenummer: 01107250.1
(22) Anmeldetag: 23.03.2001
(51) Int. Cl.: B60K 37/06

(54) **Multifunktionsbedienelement**

(30) Priorität: 31.03.2000 DE 10016180
(71) Anmelder: AUDI AG, 85045 Ingolstadt (DE)
(72) Erfinder: Hamberger, Werner, 85101 Lenting (DE)
(74) Vertreter: Thielmann, Frank

(57) **Zusammenfassung**

Die Erfindung betrifft ein Multifunktionsbedienelement. Um ein Multifunktionsbedienelement mit einer verbesserten Betätigungsmöglichkeit zur Verfügung zu stellen, dessen Bedienung auch ohne besondere Fingerfertigkeit leicht möglich ist, ist gemäß der Erfindung vorgesehen, dass neben einem ersten, als Betätigungsring (10) ausgebildeten ersten Betätigungselement mindestens ein zweites Betätigungselement im Innern des Betätigungsringes (10) angeordnet ist.

## Beschreibung

Die Erfindung betrifft ein Multifunktionsbedienelement.

Multifunktionsbedienelemente werden in vielfacher Weise im Kraftfahrzeugbau verwendet. Sie dienen beispielsweise als Spiegelverstellschalter, Beleuchtungsschalter, Betätigungselement für die Scheibenwaschanlage oder als Eingabeelemente für Audioanlagen, Bordcomputer und Navigationssysteme.

Aus DE 195 14 539 C2 ist ein Spiegelverstellschalter für Kraftfahrzeuge bekannt, welcher ein um zwei etwa senkrecht aufeinander stehende Kippachsen kippbares Betätigungselement aufweist. Das Betätigungselement ist bezogen auf eine auf seinen Kippachsen senkrecht stehende Achse drehfest ausgebildet. Dadurch ist das Betätigungselement hinsichtlich seiner Betätigungsmöglichkeiten eingeschränkt.

Ein weiterer Spiegelverstellschalter ist aus DE 197 56 053 A1 bekannt. Dieser Spiegelverstellschalter weist ein aus einem Gehäuse vorstehendes Betätigungselement auf, welches durch Kippen nach Art eines Joysticks, Drehen, Drücken und Ziehen betätigbar ist.

Ferner sind Multifunktionsbedienelemente für Audioanlagen, Bordcomputer von Kraftfahrzeugen bzw. Navigationssysteme aus DE 197 32 287 A1, DE 383 65 555 A1, DE 196 39 119 A1, DE 197 52 056 A1, DE 197 52 055 A1 und DE 296 04 717 U1 bekannt. Dabei weist das Multifunktionsbedienelement nach DE 197 32 287 A1 einen zentralen Bedienknopf auf, welcher eine Betätigung durch Drehen, Drücken und Kippen nach Art eines Joysticks ermöglicht. Mit dem Multifunktionsbedienelement ist ein Bordcomputer steuerbar, welcher verschiedene, zum Teil hierarchisch angelegte Eingabefelder aufweist die an einem Bildschirm angezeigt werden und auch als Menüebenen bezeichnet werden können. Das Multifunktionsbedienelement erlaubt ein einfaches Wechseln dieser Menüebene.

DE 38 36 555 A1 beschreibt ein Multifunktionsbedienelement, welches als Bi-direktionaler Drehschalter mit Raststellungen und axialer Bewegbarkeit ausgebildet ist und bei einem Bordcomputer dazu dient, Funktionsgruppen auszuwählen und mit Hilfe einer Enter-Funktion, die durch Drücken in axialer Richtung ausgesprochen wird, einzustellen.

Das in DE 196 39 119 A1 beschriebene Multifunktionsbedienelement zur Eingabe von Daten in ein Navigationssystem erlaubt an einem Drehschalter mit einem zentralen Betätigungselement eine Betätigung durch Drehen, Drücken und Ziehen.

Aus DE 198 32 869 A1 ist ein Multifunktionsbedienelement bekannt, welches als Lenkstockschalter ausgebildet ist. Dieses Multifunktionsbedienelement erlaubt die Auswahl eines zu betätigenden Gerätes durch Drehen des Lenkstockes, wonach dann eine Betätigung des ausgewählten Gerätes durch Verschwenken des Lenkstockes erfolgen kann. Dieses Multifunktionsbedienelement weist darüber hinaus an dem Lenkstock einen stirnseitig angeordneten Knopf auf, welchem verschiedene Funktionen zugeordnet sein können.

DE 80 27 773 U1 beschreibt ein Multifunktionsbedienelement für eine elektronische Zählschaltung, bei dem ein Drehknopf vorgesehen ist, welcher sowohl in Dreh- als auch in Zug-Druckrichtung betätigbar ist.

DE 72 26 934 U1 beschreibt einen Bediendrehgriff für Schalt- oder Regeleinrichtungen, der mit einer zentrisch angeordneten Drucktaste zum Einschalten einer weiteren elektrischen Steuereinrichtung versehen ist.

DE 17 36 669 U1 beschreibt einen Mehrwegdrehschalter mit einem Druckknopftaster, welcher insbesondere zur Betätigung motorbetätigter Haushaltsgeräte und dergleichen vorgesehen ist.

Aus der nachveröffentlichten EP 1 017 077 A1 ist ein Multifunktionsbedienelement mit den Merkmalen des Oberbegriffs des Anspruchs 1 bekannt. Dieses Multifunktionsbedienelement ist zur Betätigung einer Klimaanlage vorgesehen und weist neben einem Betätigungsring zwei Drucktaster auf, die im Innern des Betätigungsringes angeordnet sind. Nachteilig bei diesem bekannten Multifunktionsbedienelement ist die beschränkte Anzahl der durchführbaren Betätigungsmöglichkeiten.

Der Erfindung liegt die Aufgabe zugrunde, ein Multifunktionsbedienelement und einen Bordcomputer mit einer vergrößerten Anzahl an Betätigungsmöglichkeiten zur Verfügung zu stellen, dessen Bedienung auch ohne besondere Fingerfertigkeit leicht möglich ist.

Ein weiterer wesentlicher Aspekt der Erfindung ist die Bereitstellung eines zur Eingabe von Daten in und zur Bedienung von Navigationssystemen geeigneten Bedienelementes.

Die Lösung dieser Aufgabe erfolgt erfindungsgemäß durch den Gegenstand mit den Merkmalen der Ansprüche 1 und 4.

Gemäß der Erfindung ist vorgesehen, dass der Betätigungsring in Dreh- und Druckrichtung betätigbar. Dadurch ist es möglich, bei einem Bordcomputer Eingabemoden vorzusehen, die die Angabe eines Einstellwertes und eines Bestätigungsbefehls erfordern, wobei eine solche Eingabe mit dem erfindungsgemäßen Multifunktionsbedienelement gemäß der hier beschrieben bevorzugten Ausführungsform mit den beiden zur Betätigung des Betätigungsringes vorgesehenen Fingern möglich ist, ohne weitere Finger der Hand in Anspruch zu nehmen.

Durch die Möglichkeit, den Betätigungsring auch in Zugrichtung zu betätigen, wird die Vielfalt der Eingabemöglichkeiten weiter vergrößert. Dies gilt auch, wenn der Betätigungsring und das zweite Betätigungselement gemeinsam durch Kippen nach Art eines Joysticks betätigbar sind.

Das Multifunktionsbedienelement weist ein erstes Betätigungselement auf, welches als Betätigungsring ausgebildet ist, wobei mindestens ein zweites Bewtätiungslement im Innern des Betätigungsringes angeordnet ist. Diese Ausgestaltung erlaubt es, mit Daumen und Mittelfinger an dem Betätigungsring Einstellungen vorzunehmen, wobei gleichzeitig mit dem Mittelfinger an dem zweiten Betätigungselement weitere Einstellungen möglich sind.

Das Multifunktionsbedienelement ist so ausgestaltet, dass es dazu einlädt, mit mehreren Fingern bedient zu werden, wobei unterschiedliche insbesondere auch von einander unabhängige und beziehungslose Daten in einen Bordcomputer oder ein Navigationssystem eingebbar sind. Dabei ist keine besondere Fingerfertigkeit von Nöten, da der Betätigungsring, der in der Regel mit Daumen einerseits und Mittel-, Ringfinger oder kleinem Finger andererseits ergriffen werden wird, einen Bezugspunkt definiert, der auch ohne optische Überprüfung leicht zu finden ist und den übrigen Fingern einen gezielten Zugriff auf das zweite Betätigungselement ermöglicht. Durch diese Ausgestaltung ist das Multifunktionsbedienelement insbesondere für den Einsatz in Kraftfahrzeugen geeignet, in denen für den Fahrer nicht immer die Möglichkeit besteht, Eingaben optisch zu überprüfen, was insbesondere bei Stadt- und Nachtfahrten der Fall ist.

Gemäß einer bevorzugten Ausführungsform ist das zweite Betätigungselement ein Drucktaster oder Drucksensor. Mit einem solchermaßen ausgestaltetem zweitem Betätigungselement ist die Eingabe einfacher ja/nein-Befehle möglich.

Wenn das zweite Betätigungselement ein Wipptaster ist, lassen sich mit dem zweiten Betätigungselement in besonders ergonomischer und eine Anleitung nicht erfordernder Art und Weise Richtungen eingeben. Beispielsweise ist ein Wipptaster mit zwei Wippstellungen besonders zur Eingabe eines Befehls "aufwärts" oder "abwärts" geeignet, wohingegen ein Wipptaster mit vier Wippstellungen sich besonders für die Eingabe von Himmelsrichtungen oder Koordinaten eignet.

Weitere vorteilhafte Ausgestaltungen und Weiterbildungen der Erfindung ergeben sich aus den Unteransprüchen sowie aus der Beschreibung im Zusammenhang mit den Zeichnungen.

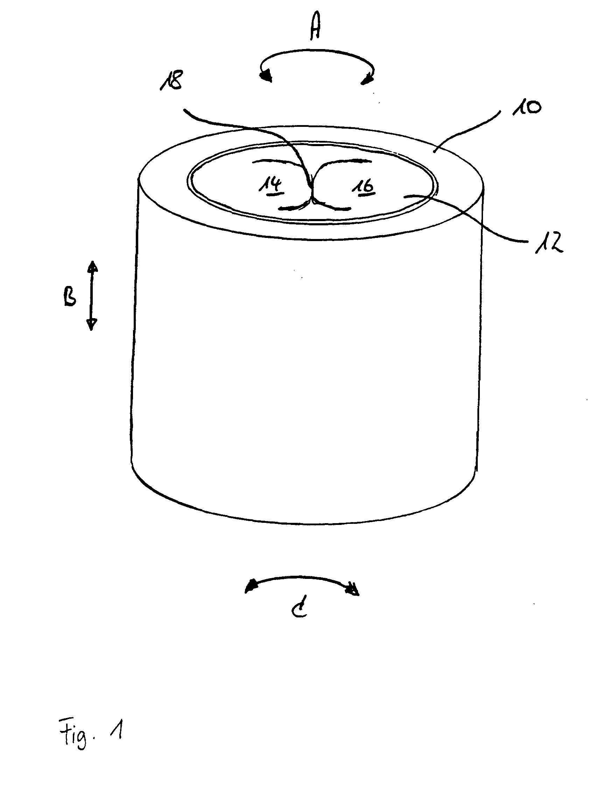

In der Figur 1 sind die beiden Betätigungselemente des Multifunktionsbedienelementes in vereinfachter perspektivischer Darstellung gezeigt.

Bei den gezeigten Betätigungselementen handelt es sich um einen Betätigungsring 10, welcher als erstes Betätigungselement vorgesehen ist und um einen Wipptaster 12, welcher als zweites Betätigungselement vorgesehen ist. Der Wipptaster ist zwischen einer ersten und einer zweiten Wippstellung kippbar ausgebildet. Der Betätigungsring 10 ist wie durch den geschwungenen Doppelpfeil A angedeutet drehbar, wobei er keinen Anschlagt aufweist, sondern als Inkrementgeber ausgebildet ist. Darüber hinaus ist der Betätigungsring 10 gemäß dem Doppelpfeil B in axialer Richtung durch Drücken oder Ziehen betätigbar.

Der als zweites Betätigungselement vorgesehene Wipptaster 12 weist eine erste und eine zweite Fingermulde 14, 16 auf, welche in der Mitte durch einen flachen Steg 18 getrennt sind. Der Wipptaster 12 ist gemäß dem Doppelpfeil C kippbar ausgestaltet.

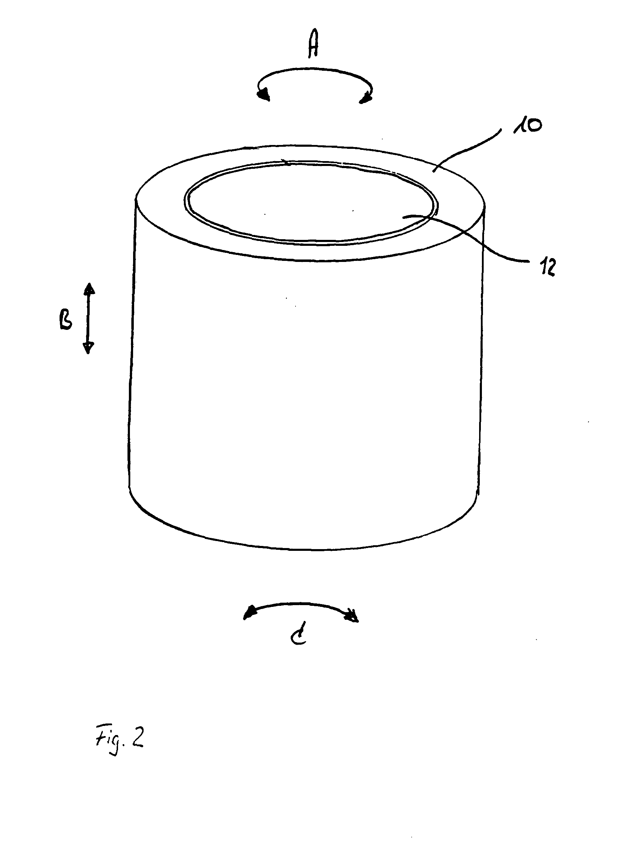

Aus der Figur 2 ergibt sich das vorbeschriebene Multifunktionsbedienelement mit dem Unterschied, dass das zweite Betätigungselement 12 als Drucktaster und/oder Drucksensor ausgeführt ist.

## Patentansprüche

1. Multifunktionsbedienelement mit einem ersten Betätigungselement und mindestens einem zweiten Betätigungselement (12), wobei das erste Betätigungselement ein Betätigungsring (10) ist und das mindestens zweite Betätigungselement (12) im Innern des Betätigungsrings (10) angeordnet ist,
**dadurch gekennzeichnet,**
**dass** der Betätigungsring (10) in Drehrichtung und Druckrichtung betätigbar ist.

2. Multifunktionsbedienelement nach Anspruch 1, **dadurch gekennzeichnet, dass** der Betätigungsring (10) in Zugrichtung betätigbar ist.

3. Multifunktionsbedienelement nach Anspruch 1 oder 2, **dadurch gekennzeichnet, dass** das zweite Betätigungselement ein Drucktaster oder Drucksensor ist.

4. Multifunktionsbedienelement mit einem ersten Betätigungselement und mindestens einem zweiten Betätigungselement (12), wobei das erste Betätigungselement ein Betätigungsring (10) ist und das mindestens zweite Betätigungselement (12) im Innern des Betätigungsrings (10) angeordnet ist, **dadurch gekennzeichnet, dass** das zweite Betätigungselement ein Drucktaster und/oder Drucksensor ist.

5. Multifunktionsbedienelement nach Anspruch 4, **dadurch gekennzeichnet, dass** das zweite Betätigungselement ein Wipptaster (12) mit insbesondere zwei oder vier Wippstellungen ist.

6. Multifunktionsbedienelement nach Anspruch 4 oder 5, **dadurch gekennzeichnet, dass** der Betätigungsring (10) in Drehrichtung und Druckrichtung betätigbar ist.

7. Multifunktionsbedienelement nach einem der Ansprüche 1 bis 6, **dadurch gekennzeichnet, dass** der Betätigungsring (10) und das zweite Betätigungselement (12) gemeinsam durch Kippen nach Art eines Joysticks betätigbar sind.

8. Bordcomputer, insbesondere Navigationssystem, **gekennzeichnet durch** ein Multifunktionsbedienelement nach einem der Ansprüche 1 bis 7.
